# EUROPEAN PATENT APPLICATION

(11) **EP 4 275 948 A1**
(43) Date of publication of application: **15.11.2023**
(21) Application number: 23171294.4
(22) Date of filing: 03.05.2023
(51) Int. Cl.: B60L 53/60, B60L 53/62, B60L 53/63, B60L 53/68

(54) **LOAD MANAGEMENT OF AN ELECTRIC VEHICLE CHARGING STATION**

(30) Priority: 09.05.2022 FI 20225399
(71) Applicant: LIIKENNEVIRTA OY / VIRTA LTD, 00180 Helsinki (FI)
(72) Inventor: Henriksson, Jani, 02740 Espoo (FI)
(74) Representative: Papula Oy

(57) **Abstract**

Various example embodiments relate to load management of an electric vehicle charging station. A computer-implemented method may comprise receiving a notification of an event related to a charging session at a charging station; determining a charging profile for the charging station based on the available charging current at the charging station; sending the charging profile to the charging station, wherein the charging profile is configured to expire after a predefined amount of time.

## Description

### FIELD OF THE INVENTION

The present application generally relates to an electric vehicle (EV) charging station. In particular, some example embodiments of the present application relate to load management of a charging station.

### BACKGROUND OF THE INVENTION

In the context of EV charging, load management is the process of adjusting the charging load at a charging station. Load management can be implemented on a network of remote servers hosted on the internet. However, such a cloud-based load management is vulnerable to a loss of internet connection at the charging station.

### SUMMARY OF THE INVENTION

This summary is provided to introduce a selection of concepts in a simplified form that are further described below in the detailed description. This summary is not intended to identify key features or essential features of the claimed subject matter, nor is it intended to be used to limit the scope of the claimed subject matter.

Example embodiments may enable a reactive solution for situations where a charging station drops offline when subjected to load management services. Example embodiments may significantly reduce or even cut the charging current at a charging station when the charging station is offline. As the server may not be able to control a charging station if the charging station drops offline, example embodiments may provide a pre-emptive solution by implementing, at the charging station, a charging configuration that expires after a defined period.

Further implementation forms are provided in the dependent claims, the description, and the drawings.

According to a first aspect, a computer-implemented method, may comprise: receiving a notification of an event related to a charging session at a charging station, the charging station being subjected to load management; calculating an available charging current at the charging station; determining a charging profile for the charging station based on the available charging current at the charging station; sending the charging profile to the charging station , wherein the charging profile is configured to expire after a predefined amount of time; instructing the charging station to implement the charging profile, set a timer with the predefined amount of time, and implement a default profile at the expiration of the timer; re-sending the charging profile to the charging station; and instructing the charging station to reset the timer each time the charging profile is re-sent.

According to an example embodiment of the first aspect, re-sending the charging profile comprises resending the charging profile at a regular interval.

According to an example embodiment of the first aspect, the event is a new charging session or an end of a charging session.

According to an example embodiment of the first aspect, the default profile is set to a minimum power.

According to an example embodiment of the first aspect, the minimum power is zero.

According to an example embodiment of the first aspect, the method further comprises: receiving a notification of a new event at the charging station; calculating a new available charging current at the charging station; determining a new charging profile for the charging station based on the new available charging current at the charging station; sending the new charging profile to the charging station, wherein the new charging profile is configured to expire after a predefined amount of time; instructing the charging station to implement the new charging profile, and reset the timer with the predefined amount of time; re-sending the new charging profile to the charging station; and instructing the charging station to reset the timer each time the new charging profile is re-sent.

According to a second aspect, a computer-implemented method may comprise detecting an event related to a charging session at a charging station subjected to load management; sending a notification to a Charging Point Management System -CPMS-; receiving a charging profile from the CPMS, wherein the charging profile is configured to expire after a predefined amount of time; implementing the charging profile at the charging station; setting a timer with the predefined amount of time; resetting the timer each time the charging profile is received again from the CPMS; and implementing a default profile at the charging station at the expiration of the timer.

According to an example embodiment of the second aspect, the default profile is stored at the charging station.

According to an example embodiment of the second aspect, the event is a new charging session or an end of a charging session.

According to an example embodiment of the second aspect, the default profile is set to a minimum power or to zero power.

According to an example embodiment of the second aspect, the method further comprising: detecting a new event at the charging station; sending a new notification to the CPMS; receiving a new charging profile from the CPMS, wherein the new charging profile is configured to expire after the predefined amount of time; implementing the new charging profile at the charging station; and resetting the timer each time the new charging profile is received from the CPMS.

According to a third aspect, a computing device may comprise at least one processor; and at least one memory including computer program code; the at least one memory and the computer code configured to, with the at least one processor, cause the computing device to perform the method of any embodiments according to the first or second aspect.

According to a fourth aspect, a computer program product may comprise instructions which, when the program is executed by a computer, cause the computer to carry out the method of any embodiments according to the first or second aspect.

According to a fifth aspect, a computer-readable medium may comprise instructions which, when executed by a computer, cause the computer to carry out the method of any embodiments according to the first or second aspect.

Many of the attendant features will be more readily appreciated as they become better understood by reference to the following detailed description considered in connection with the accompanying drawings.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Fig. 1A** **and** **1B** illustrate example embodiments of an infrastructure for charging EVs.
**Fig. 2** illustrates an example embodiment of a CPMS.
**Fig. 3** illustrates an example embodiment of a charging station.
**Fig. 4** is a flowchart representation of an example process for load management performed at a CPMS.
**Fig. 5** is a flowchart representation of an example process for load management performed at a charging station.

Like reference numerals are used to designate like parts in the accompanying drawings.

### DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms in which the present disclosure may be constructed or utilized. The description sets forth the functions of the example and the sequence of steps for constructing and operating the example. However, the same or equivalent functions and sequences may be accomplished by different example embodiments.

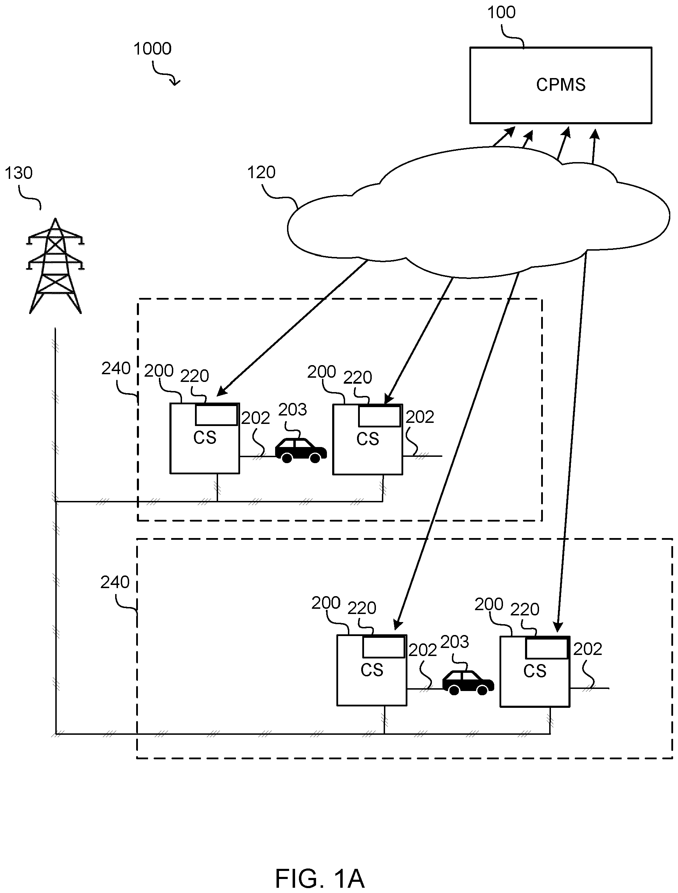

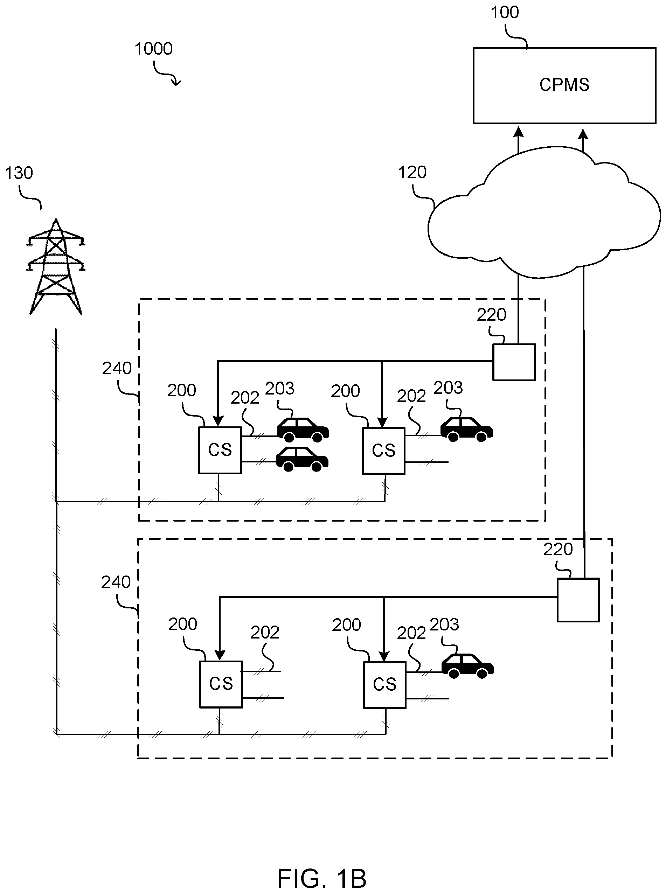

**Figs 1A** **and** **1B** illustrate examples of an EV charging network 1000 that can implement the charging management techniques described in this specification. An EV charging network 1000 is an infrastructure system of charging stations 200 to recharge EVs 203.

A charging station 200 supplies electrical power for charging plug-in EV 203 (including hybrids, electric vehicles, trucks, buses, and others). Each charging station 200 is connected to an electrical grid 130 or another power source.

A charging station 200 may comprise one or more charging points 202. A charging point 202 comprises an electrical outlet that supplies electrical power to a plug-in EV 203.

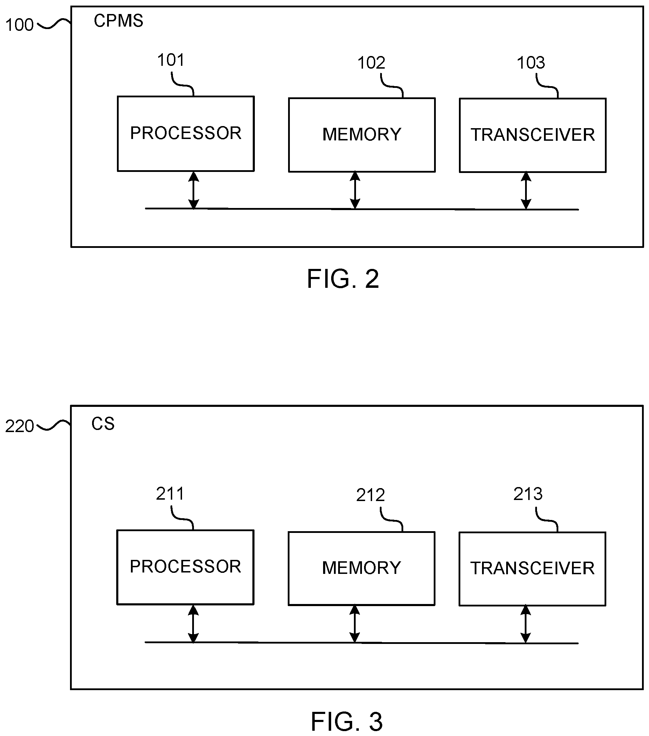

A charging site 240 may comprise one or more charging stations 200. A charging site 240 may comprise a control unit 220. Alternatively, each charging station 200 of a charging site 240 may comprise a control unit. The control unit 220 controls the charging points 202 of one or more charging stations. The control unit 220 can receive signals from the charging points 202 regarding events such as connection or disconnection of an EV. The control unit 220 can also send orders to the charging points to control charging. An example embodiment of the control unit 220 of the charging station 200 is described in more detail below with reference to FIG. 3.

A charging station 200 may communicate with a Charging Point Management System (CPMS) 100 via a computer network 120 such as the internet. The CPMS 100 can be cloud-based. In particular, the CPMS 100 can be stored, managed, and/or processed on a network of remote servers hosted on the computer network 120. An example embodiment of the CPMS 100 is described in more detail below with reference to FIG. 2.

The CPMS 100 may control the charging at one or more charging stations 200. In particular, the CPMS 100 may determine a charging profile for a charging station 200 and send the charging profile to the charging station 200.

The charging profile includes a set of instructions for the charger to follow for charging of the battery. A charging profile may define a charging current for the charging process. In particular, the charging profile may include a charging current trajectory. The charging profile may include logic to be used by the charging station 200 to execute the charging process. In particular, the charging process may be a multi-stage charging process, including bulk, absorption and finishing phases.

A charging station 200 may be subject to limitations in terms of electricity supply. For example, a charging station 200 may be subject to grid connection limitation, peak shaving, peak shifting, demand-side management, etc.

A charging station 200 may be subjected to load management services. Load management is the process of balancing the supply of electricity at the charging station with the electrical load by adjusting or controlling the charging load. In particular, load management may be used to adjust the charging load at the charging station based on the limitations in terms of electricity supply that apply to the charging station. Load management may be managed at the CPMS 100.

For example, the charging load can be optimized so that electricity is evenly distributed to all the EVs 203 that are charged simultaneously at the charging station 200. The charging load can also be optimized so that charging happens at a full volume whenever there is enough capacity.

Load management can be triggered by a specific event, such as a new charging session started, a charging session was stopped, etc.

When performing load management, the CPMS 100 may calculate an available charging current for one or more charging stations. In particular, the CPMS 100 may calculate an available charging current for each individual charging point of a charging station.

For example, if the current available to a charging site 240 is limited to 64A, and there are eight charging stations 200 at the charging site 240 operating simultaneously, the available charging current per charging station is 64A/8CS = 8A. When there are only four charging stations 200 charging at the charging site 240, the available current per charging station is 64A/4CS = 16A.

When a charging station 200 loses its internet connection, the CPMS 100 has no visibility or control over the charging station. This could cause some problems. For example, a user could start charging on an offline station locally, e.g., by using an RFID tag. If an offline charging station 200 starts or continues charging according to a latest accepted request from the CPMS, this could lead to an over-current.

In a worst-case scenario, a charging station 200 could drop offline while the latest request received from the CPMS 100 is to charge with maximum power. If a user then starts a charging session, the charging station could start charging with maximum power without the CPMS even knowing about it. This charging load would then be considered as non-controllable load, as the server does not have any capability for managing the load. Potentially, this could lead to an over-current, especially if charging stations drop offline on a larger scale.

For example, if the CPMS 100, assuming that the offline charging station is not charging, instructs another charging station of the charging site to start charging, this could lead to an over-current at the charging site.

Example embodiments provide a reactive solution for situations where a charging station 200 drops offline while subjected to load management services. In particular, the CPMS 100 may reduce the charging current at the charging station when the charging station is offline. The CPMS 100 may even pause charging at the charging station when the charging station is offline.

As the CPMS 100 may not be able to control the charging station after the charging station drops offline, the CPMS 100 may implement a pre-emptive solution. In particular, the CPMS 100 may configure the charging station 200 with a charging profile that expires after a defined period of time.

In example embodiments, the CPMS 100 configures the charging station 200 with a charging profile (e.g., TxProfile as defined in Open Charge Point Protocol (OCPP) 1.6) and a default profile (e.g., TxDefaultProfile as defined in OCPP 1.6), as well as rules to selectively implement the charging profile and the default profile.

More specifically, the charging profile may be used to adjust the available charging current during an ongoing charging session. In the absence of an available charging profile, the default profile may be implemented. The default profile may be stored at the charging station 200. The default profile may set the available current to a default current. The default current may be a minimum current e.g., 6A or 0A. Further, the charging profile may override the default profile. For example, if a new charging profile becomes available while the default profile is being implemented at the charging station, the charging station may implement the new charging profile, thereby overriding the default profile.

Upon detecting a new charging session at a charging station 200, the CPMS 100 may send a charging request to the charging station 200.

The charging request may include a charging profile as well as an expiration time for the charging profile. The expiration time can be configured by a timer associated with the predetermined amount of time, e.g., a 900 second. Each time the CPMS 100 sends a charging request to the charging station 200, the CPMS 100 may instruct the charging station to implement the charging profile and set a timer with the predefined amount of time.

The charging station 200 may be configured to implement the default profile when no other charging profile is available. As such, at the expiration of the timer, and if no other charging profile is available at the charging station 200, the charging station 200 implements the default profile.

Every time a charging session ends, the CPMS 100 may first instructs the charging station 200 to clear any current charging profile (e.g., with a Clear-ChargingProfile instruction as defined in OCPP 1.6). This may avoid situations where the charging profile would still incorrectly be available at the charging station. When no charging profile is available, the charging station 200 implements the default profile.

Whenever the CPMS detects a new event that requires sending a new charging request, such as a new charging session, the end of a charging session, or a change in a charging session, the CPMS may send a new charging request to the charging station together with a new charging profile and a new timer. The new charging profile may override the current profile. In particular, if the charging station is currently implementing a charging profile, the new charging profile may override the current charging profile. Similarly, if the charging station is currently implementing the default profile, the new charging profile may override the default profile.

The CPMS 100 may keep sending charging profiles to the charging station 200 as long as the charging session is ongoing. In particular, in the absence of an event at the charging station, the CPMS 100 may keep sending the same charging profile to the charging station 200. The CPMS 100 sends a charging profile to the charging station at the latest before the timer expires. In particular, the CPMS 100 may send charging profiles to the charging station 200 on a regular basis.

Each time the CPMS 100 sends a charging profile, the CPMS 100 may instruct the charging station to reset the timer. As such, the charging profile does not expire as long as the CPMS 100 keeps sending requests to the charging station 200.

As such, the charging station 200 keeps implementing the charging profile as long as a charging session is ongoing and as long as communications from the CPMS 100 are received at the charging station 200. However, if the charging station stops receiving communications from the CPMS 100, for example because the charging station is offline, the charging profile will expire, and the charging station will implement the default profile.

The default profile can be set to a minimum charging current, such that the charging station reduces the charging current for the duration of the offline period. For example, the default current can be set to zero, such that the charging station 200 suspends charging for the duration of the offline period.

The predefined amount of time after which the charging profile expires can be configured to match the properties of a fuse of the charging site (e.g., how long the fuse can handle an over-load). As such, the fuse can handle a temporary over-current that might occur before the charging station 200 reverts to the default profile.

When the charging station 200 re-establishes the internet connection to the CPMS 100, the requests sent by the CPMS 100 are once again received at the charging station 200. When the charging station 200 receives a charging profile, the charging station 200 implements the charging profile thereby overriding the default profile.

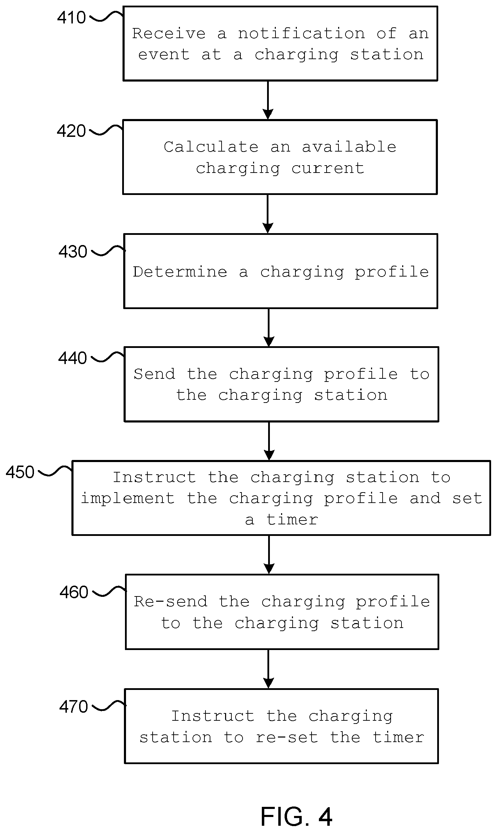

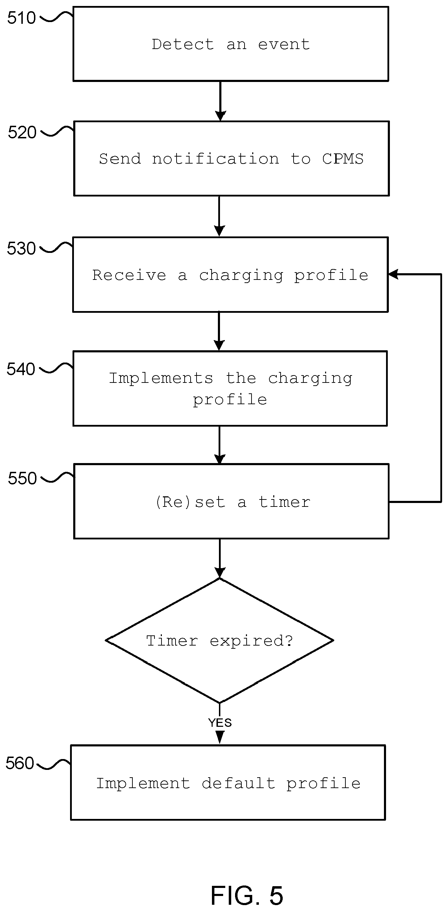

The process performed at the CPMS 100 is described in more detail below with reference to FIG. 4. The process performed at the charging station 200 is described in more detail below with reference to FIG. 5.

**Fig. 2** is a block diagram of a CPMS 100 configured in accordance with an example embodiment.

The CPMS 100 may comprises one or more processors 101 and one or more memories 102 that comprise computer program code. The CPMS 100 may also comprise at least one transceiver 103, as well as other elements, such as an input/output module (not shown in Fig. 2), and/or a communication interface (not shown in Fig. 2).

According to an example embodiment, the at least one memory 102 and the computer program code are configured to, with the at least one processor 101, cause the CPMS 100 to perform the process described in more detail below with reference to FIG. 4.

Although the CPMS 100 may be depicted to comprise only one processor 101, the CPMS 100 may comprise more processors. In an example embodiment, the memory 102 is capable of storing instructions, such as an operating system and/or various applications.

Furthermore, the processor 101 may be capable of executing the stored instructions. In an example embodiment, the processor 101 may be embodied as a multi-core processor, a single core processor, or a combination of one or more multi-core processors and one or more single core processors. For example, the processor 101 may be embodied as one or more of various processing devices, such as a coprocessor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like. In an example embodiment, the processor 101 may be configured to execute hard-coded functionality. In an example embodiment, the processor 101 is embodied as an executor of software instructions, wherein the instructions may specifically configure the processor 101 to perform the algorithms and/or operations described herein when the instructions are executed.

The memory 102 may be embodied as one or more volatile memory devices, one or more non-volatile memory devices, and/or a combination of one or more volatile memory devices and non-volatile memory devices. For example, the memory 102 may be embodied as semiconductor memories (such as mask ROM, PROM (programmable ROM), EPROM (erasable PROM), flash ROM, RAM (random access memory), etc.).

When the CPMS 100 is configured to implement some functionality, some component and/or components of the CPMS 100, such as the at least one processor 101 and/or the memory 102, may be configured to implement this functionality. Furthermore, when the at least one processor 101 is configured to implement some functionality, this functionality may be implemented using program code comprised, for example, in the memory 102. For example, if the CPMS 100 is configured to perform an operation, the at least one memory 102 and the computer program code can be configured to, with the at least one processor 101, cause the CPMS 100 to perform that operation.

**Fig. 3** is a block diagram of a control unit 220 of a charging station 200 configured in accordance with an example embodiment.

The control unit 220 may comprise one or more processors 211 and one or more memories 212 that comprise computer program code. The control unit 220 may also comprise at least one transceiver 213, as well as other elements, such as an input/output module (not shown in Fig. 3), and/or a communication interface (not shown in Fig. 3).

According to an example embodiment, the at least one memory 212 and the computer program code are configured to, with the at least one processor 211, cause the control unit 220 to perform the process described in more detail below with reference to FIG. 5.

Although the control unit 220 may be depicted to comprise only one processor 211, the control unit 220 may comprise more processors. In an example embodiment, the memory 212 is capable of storing instructions, such as an operating system and/or various applications.

Furthermore, the processor 211 may be capable of executing the stored instructions. In an example embodiment, the processor 211 may be embodied as a multi-core processor, a single core processor, or a combination of one or more multi-core processors and one or more single core processors. For example, the processor 211 may be embodied as one or more of various processing devices, such as a coprocessor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like. In an example embodiment, the processor 211 may be configured to execute hard-coded functionality. In an example embodiment, the processor 211 is embodied as an executor of software instructions, wherein the instructions may specifically configure the processor 211 to perform the algorithms and/or operations described herein when the instructions are executed.

The memory 212 may be embodied as one or more volatile memory devices, one or more non-volatile memory devices, and/or a combination of one or more volatile memory devices and non-volatile memory devices. For example, the memory 212 may be embodied as semiconductor memories (such as mask ROM, PROM (programmable ROM), EPROM (erasable PROM), flash ROM, RAM (random access memory), etc.).

When the charging station 200 is configured to implement some functionality, some component and/or components of the control unit 220, such as the at least one processor 211 and/or the memory 212, may be configured to implement this functionality. Furthermore, when the at least one processor 211 is configured to implement some functionality, this functionality may be implemented using program code comprised, for example, in the memory 212. For example, if the charging station 200 is configured to perform an operation, the at least one memory 212 and the computer program code can be configured to, with the at least one processor 211, cause the charging station 200 to perform that operation.

**FIG. 4** is a flowchart of an example process for performing load management at a CPMS 100. The process can be implemented on a network of remote servers hosted on the internet. For example, the process can be implemented at a CPMS 100 as describes in relation to FIG. 1A or 1B.

At operation 410, the CPMS 100 may receive a notification of an event at a charging station 200 subjected to dynamic load management. For example, the event can be a new charging session, the end of a charging session or a change related to a charging session. The notification may be received from the charging station 200.

At operation 420, the CPMS 100 may calculate an available charging current at the charging station. In particular, the CPMS may calculate an available charging current at each charging point of the charging station. The available charging current may be determined based on limitations at the charging station in terms of electricity supply. In particular, the available charging current may be determined based on an available current at the charging site.

At operation 430, the CPMS 100 may determine a charging profile for the charging station 200. The charging profile may be specific to the one or more charging sessions ongoing at the charging station 200. The charging profile may be determined based on the available charging current calculated for the charging station.

At operation 440, the CPMS 100 may send the charging profile to the charging station 200. The charging profile is configured to expire after a predefined amount of time.

At operation 450, the CPMS 100 may instruct the charging station 200 to implement the charging profile and set a timer with the predefined amount of time. If the charging station 200 is implementing another profile (e.g., another charging profile or the default profile) when the instruction is received, the charging station replaces the current profile with the charging profile. The CPMS 100 may further instruct the charging station 200 to implement the default profile at the expiration of the timer. The process implemented at the charging station is described in more detail below with reference to FIG. 3.

At operation 460, the CPMS 100 may re-send the charging profile to the charging station 200. In particular, the CPMS 100 may re-send the same charging profile to the charging station before the current charging profile expires. For example, the CPMS may resend the same charging profile at a regular interval while the charging session is ongoing. If a new event is identified at the charging station, the CPMS 100 may send a new charging profile to the charging station 200.

At operation 470, the CPMS 100 may instruct the charging station to reset the timer each time a charging profile is re-sent.

**FIG. 5** is a flowchart of an example process for performing load management at a charging station. The process can be implemented on one or more processors hosted locally at the charging station. For example, the process can be implemented at a charging station 200 as described in relation to FIG. 1A or 1B.

At operation 510, the charging station 200 may detect an event related to a charging session at the charging station 200. For example, the event can be a new charging session, the end of a charging session or a change related to a charging session.

At operation 520, the charging station 200 may send a notification of the event to the CPMS 100.

At operation 530, the charging station 200 may receive a charging profile for the charging session from the CPMS 100.

At operation 540, the charging station 200 may implement the charging profile. The charging profile is configured to expire after a predefined amount of time.

At operation 550, the charging station 200 may set a timer. The charging station 200 may reset the timer each time a charging profile is received.

At operation 560, at the expiration of the time, the charging station 200 may implement the default profile.

An apparatus may comprise means for performing any aspect of the method(s) described herein. According to an example embodiment, the means comprises at least one processor, and memory comprising program code, the at least one processor, and program code configured to, when executed by the at least one processor, cause performance of any aspect of the method.

The functionality described herein can be performed, at least in part, by one or more computer program product components such as software components. According to an example embodiment, the CPMS 100 comprises a processor configured by the program code when executed to execute the example embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), Applicationspecific Integrated Circuits (ASICs), Application-specific Standard Products (ASSPs), System-on-a-chip systems (SOCs), Complex Programmable Logic Devices (CPLDs), and Graphics Processing Units (GPUs).

Any range or device value given herein may be extended or altered without losing the effect sought. Also any example embodiment may be combined with another example embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one example embodiment or may relate to several example embodiments. The example embodiments are not limited to those that solve any or all of the stated problems or those that have any or all of the stated benefits and advantages. It will further be understood that reference to 'an' item may refer to one or more of those items.

The steps of the methods described herein may be carried out in any suitable order, or simultaneously where appropriate. Additionally, individual blocks may be deleted from any of the methods without departing from the spirit and scope of the subject matter described herein. Aspects of any of the example embodiments described above may be combined with aspects of any of the other example embodiments described to form further example embodiments without losing the effect sought.

The term 'comprising' is used herein to mean including the method, blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various example embodiments have been described above with a certain degree of particularity, or with reference to one or more individual example embodiments, those skilled in the art could make numerous alterations to the disclosed example embodiments without departing from the spirit or scope of this specification.

## Claims

1. A computer-implemented method, comprising:
receiving (410) a notification of an event related to a charging session at a charging station (200), the charging station being subjected to load management;
calculating (420) an available charging current at the charging station;
determining (430) a charging profile for the charging station (200) based on the available charging current at the charging station;
sending (440) the charging profile to the charging station (200), wherein the charging profile is configured to expire after a predefined amount of time;
instructing (450) the charging station (200) to
implement the charging profile,
set a timer with the predefined amount of time, and
implement a default profile at the expiration of the timer;
re-sending (460) the charging profile to the charging station (200); and
instructing (470) the charging station (200) to reset the timer each time the charging profile is re-sent .

2. The computer-implemented method of claim 1, wherein re-sending (460) the charging profile comprises resending the charging profile at a regular interval.

3. The computer-implemented method of claim 1 or 2, wherein the event is a new charging session or an end of a charging session.

4. The computer-implemented method of any of claims 1 to 3, wherein the default profile is set to a minimum power.

5. The computer-implemented method of claim 4, wherein the minimum power is zero.

6. The computer-implemented method of any of claims 1 to 5, further comprising
receiving (410) a notification of a new event at the charging station (200);
calculating (420) a new available charging current at the charging station;
determining (430) a new charging profile for the charging station (200) based on the new available charging current at the charging station;
sending (440) the new charging profile to the charging station (200), wherein the new charging profile is configured to expire after a predefined amount of time;
instructing (450) the charging station (200) to
implement the new charging profile, and
reset the timer with the predefined amount of time;
re-sending (460) the new charging profile to the charging station (200); and
instructing (470) the charging station (200) to reset the timer each time the new charging profile is re-sent.

7. A computer-implemented method, comprising:
detecting (510) an event related to a charging session at a charging station (200) subjected to load management;
sending (520) a notification to a Charging Point Management System CPMS (100);
receiving (530) a charging profile from the CPMS (100), wherein the charging profile is configured to expire after a predefined amount of time;
implementing (540) the charging profile at the charging station (200);
setting (550) a timer with the predefined amount of time;
resetting (550) the timer each time the charging profile is received again from the CPMS (110); and
implementing (560) a default profile at the charging station (200) at the expiration of the timer.

8. The computer-implemented method of claim 7, wherein the default profile is stored at the charging station (200).

9. The computer-implemented method of claim 7 or 8, wherein the event is a new charging session or an end of a charging session.

10. The computer-implemented method of any of claims 7 to 9, wherein the default profile is set to a minimum power or to zero power.

11. The computer-implemented method of any of claims 7 to 10, further comprising:
detecting (510) a new event at the charging station (200);
sending (520) a new notification to the CPMS (100) ;
receiving (530) a new charging profile from the CPMS (100), wherein the new charging profile is configured to expire after the predefined amount of time;
implementing (540) the new charging profile at the charging station (200); and
resetting (550) the timer each time the new charging profile is received from the CPMS (110).

12. A computing device, the computing device comprising:
at least one processor; and
at least one memory including computer program code;
the at least one memory and the computer code configured to, with the at least one processor, cause the computing device to perform the method of any of claim 1 to 11.

13. A computer program product comprising instructions which, when the program is executed by a computer, cause the computer to carry out the method of any of claims 1 to 11.

14. A computer-readable medium comprising instructions which, when executed by a computer, cause the computer to carry out the method of any of claims 1 to 11.
